# EUROPEAN PATENT APPLICATION

(11) **EP 3 699 747 A1**
(43) Date of publication of application: **26.08.2020**
(21) Application number: 20155345.0
(22) Date of filing: 04.02.2020
(51) Int. Cl.: G06F 3/06, G06F 8/654, G06F 8/656

(54) **RAID AWARE DRIVE FIRMWARE UPDATE**

(30) Priority: 21.02.2019 US 201916281520
(71) Applicant: Intel Corporation, Santa Clara, CA 95054 (US)
(72) Inventor: PIOCH, Marcin, 80398 Gdansk (PL); WYSOCKI, Piotr, 80-041 Gdansk (PL); PTAK, Slawomir, 80-399 Gdansk (PL)
(74) Representative: Rummler, Felix

(57) **Abstract**

An embodiment of a semiconductor apparatus may include technology to receive a request for a firmware update of one or more member drives of a redundant storage volume that includes at least two member persistent storage drives, and maintain continued access to the redundant storage volume during the firmware update of the one or more member drives of the redundant storage volume. Other embodiments are disclosed and claimed.

## Description

### TECHNICAL FIELD

Embodiments generally relate to storage systems. More particularly, embodiments relate to a redundant array of independent disks (RAID) aware drive firmware update.

### BACKGROUND

Some redundant storage systems may include RAID technology. RAID levels and data format standards are set by the Storage Networking Industry Association (SNIA). A RAID array generally includes two or more storage drive devices, each of which includes their own firmware. From time to time, a drive that is part of a RAID array may require or benefit from a firmware update.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of an electronic redundant storage system according to an embodiment;
FIG. 2 is a block diagram of an example of a semiconductor apparatus according to an embodiment;
FIGs. 3A to 3C are flowcharts of an example of a method of controlling redundant storage according to an embodiment;
FIGs. 4A to 4B are flowcharts of an example of a method of controlling a RAID volume according to an embodiment;
FIG. 5 is a block diagram of an example of an electronic processing system according to an embodiment;
FIG. 6 is a block diagram of an example of a computing system according to an embodiment; and
FIG. 7 is a block diagram of an example of a RAID device according to an embodiment.

### DESCRIPTION OF EMBODIMENTS

Various embodiments described herein may include a memory component and/or an interface to a memory component. Such memory components may include volatile and/or nonvolatile (NV) memory. Volatile memory may be a storage medium that requires power to maintain the state of data stored by the medium. Non-limiting examples of volatile memory may include various types of random access memory (RAM), such as dynamic RAM (DRAM) or static RAM (SRAM). One particular type of DRAM that may be used in a memory module is synchronous dynamic RAM (SDRAM). In particular embodiments, DRAM of a memory component may comply with a standard promulgated by Joint Electron Device Engineering Council (JEDEC), such as JESD79F for double data rate (DDR) SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at jedec.org). Such standards (and similar standards) may be referred to as DDR-based standards and communication interfaces of the storage devices that implement such standards may be referred to as DDR-based interfaces.

NVM may be a storage medium that does not require power to maintain the state of data stored by the medium. In one embodiment, the memory device may include a block addressable memory device, such as those based on NAND or NOR technologies. A memory device may also include future generation nonvolatile devices, such as a three dimensional (3D) crosspoint memory device, or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor RAM (FeTRAM), anti-ferroelectric memory, magnetoresistive RAM (MRAM) memory that incorporates memristor technology, resistive memory including the metal oxide base, the oxygen vacancy base and the conductive bridge RAM (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thiristor based memory device, or a combination of any of the above, or other memory. The memory device may refer to the die itself and/or to a packaged memory product. In particular embodiments, a memory component with non-volatile memory may comply with one or more standards promulgated by the JEDEC, such as JESD218, JESD219, JESD220-1, JESD223B, JESD223-1, or other suitable standard (the JEDEC standards cited herein are available at jedec.org).

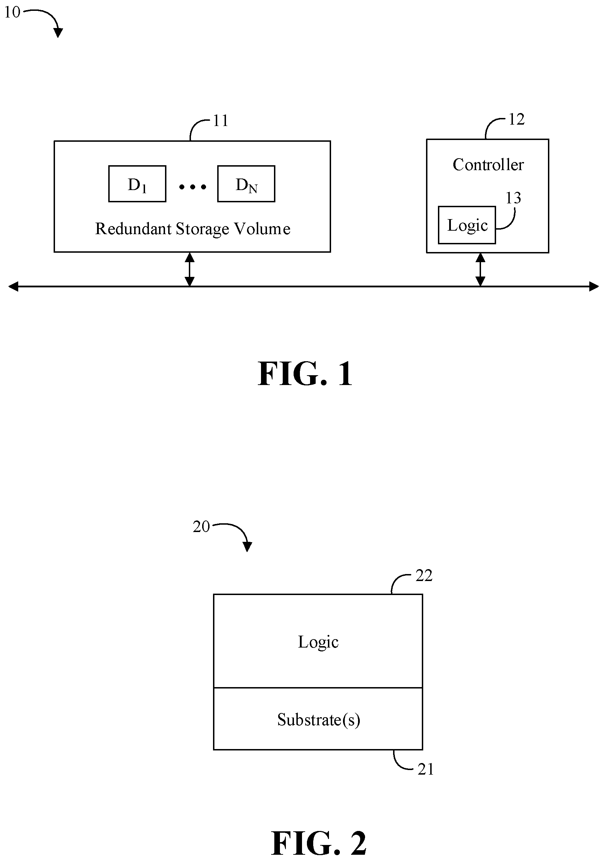

Turning now to FIG. 1, an embodiment of an electronic redundant storage system 10 may include a redundant storage volume 11 that includes at least two member persistent storage drives (e.g., drives D₁ through D_{N}, where N>1), and a controller 12 communicatively coupled to the redundant storage volume 11. The controller 12 may include logic 13 to receive a request for a firmware update of one or more member drives of the redundant storage volume 11, and maintain continued access to the redundant storage volume 11 during the firmware update of the one or more member drives of the redundant storage volume 11. In some embodiments, the logic 13 may be configured to deactivate a member drive to be updated, and store a log of information related to write requests on another member drive of the redundant storage volume 11. For example, the logic 13 may be configured to transparently operate the redundant storage volume 11 in a degraded mode without the deactivated member drive during the firmware update. The logic 13 may also be configured to determine if the firmware update of the deactivated member drive is complete, and apply a recovery process to the deactivated member drive based on the stored log when the firmware update of the deactivated member drive is determined to be complete. In some embodiments, the logic 13 may be further configured to maintain continued access to the redundant storage volume 11 during a reset of an updated member drive, and/or to manage a sequential update of two or more member drives of the redundant storage volume 11. In any of the embodiments herein, the at least two member persistent storage drives of the redundant storage volume 11 may comprise two or more solid state drives (SSDs). In some embodiments, the logic 13 may be located in, or co-located with, various components, including the controller 12 (e.g., on a same die).

Embodiments of each of the above persistent storage volume 11, controller 12, logic 13, and other system components may be implemented in hardware, software, or any suitable combination thereof. For example, hardware implementations may include configurable logic such as, for example, programmable logic arrays (PLAs), field programmable gate arrays (FPGAs), complex programmable logic devices (CPLDs), or fixed-functionality logic hardware using circuit technology such as, for example, application specific integrated circuit (ASIC), complementary metal oxide semiconductor (CMOS) or transistor-transistor logic (TTL) technology, or any combination thereof. Embodiments of the controller 12 may include a general purpose controller, a special purpose controller, a storage controller, a memory controller, a micro-controller, general purpose processor, a special purpose processor, a central processor unit (CPU), etc.

Alternatively, or additionally, all or portions of these components may be implemented in one or more modules as a set of logic instructions stored in a machine- or computer-readable storage medium such as random access memory (RAM), read only memory (ROM), programmable ROM (PROM), firmware, flash memory, etc., to be executed by a processor or computing device. For example, computer program code to carry out the operations of the components may be written in any combination of one or more operating system (OS) applicable/appropriate programming languages, including an object-oriented programming language such as PYTHON, PERL, JAVA, SMALLTALK, C++, C# or the like and conventional procedural programming languages, such as the "C" programming language or similar programming languages. For example, the redundant storage volume 11, persistent storage media, or other system memory may store a set of instructions which when executed by the controller 12 cause the system 10 to implement one or more components, features, or aspects of the system 10 (e.g., the logic 13, receiving the request for the firmware update of one or more member drives of the redundant storage volume 11, maintaining continued access to the redundant storage volume 11 during the firmware update of the one or more member drives, etc.).

Turning now to FIG. 2, an embodiment of a semiconductor apparatus 20 for use with redundant storage may include one or more substrates 21, and logic 22 coupled to the one or more substrates 21, wherein the logic 22 is at least partly implemented in one or more of configurable logic and fixed-functionality hardware logic. The logic 22 coupled to the one or more substrates 21 may be configured to receive a request for a firmware update of one or more member drives of a redundant storage volume that includes at least two member persistent storage drives, and maintain continued access to the redundant storage volume during the firmware update of the one or more member drives of the redundant storage volume. In some embodiments, the logic 22 may be configured to deactivate a member drive to be updated, and store a log of information related to write requests on another member drive of the redundant storage volume. For example, the logic 22 may be configured to transparently operate the redundant storage volume in a degraded mode without the deactivated member drive during the firmware update. The logic 22 may also be configured to determine if the firmware update of the deactivated member drive is complete, and apply a recovery process to the deactivated member drive based on the stored log when the firmware update of the deactivated member drive is determined to be complete. In some embodiments, the logic 22 may be further configured to maintain continued access to the redundant storage volume during a reset of an updated member drive, and/or to manage a sequential update of two or more member drives of the redundant storage volume. In any of the embodiments herein, the at least two member persistent storage drives of the redundant storage volume may comprise two or more SSDs. In some embodiments, the logic 22 coupled to the one or more substrates 21 may include transistor channel regions that are positioned within the one or more substrates 21.

Embodiments of logic 22, and other components of the apparatus 20, may be implemented in hardware, software, or any combination thereof including at least a partial implementation in hardware. For example, hardware implementations may include configurable logic such as, for example, PLAs, FPGAs, CPLDs, or fixed-functionality logic hardware using circuit technology such as, for example, ASIC, CMOS, or TTL technology, or any combination thereof. Additionally, portions of these components may be implemented in one or more modules as a set of logic instructions stored in a machine- or computer-readable storage medium such as RAM, ROM, PROM, firmware, flash memory, etc., to be executed by a processor or computing device. For example, computer program code to carry out the operations of the components may be written in any combination of one or more OS applicable/appropriate programming languages, including an object-oriented programming language such as PYTHON, PERL, JAVA, SMALLTALK, C++, C# or the like and conventional procedural programming languages, such as the "C" programming language or similar programming languages.

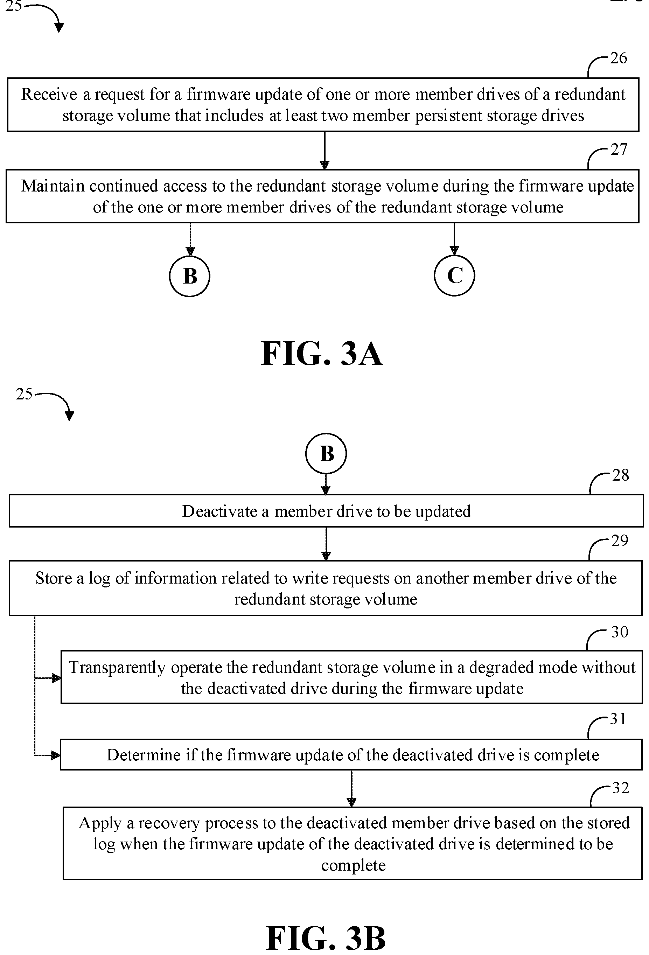

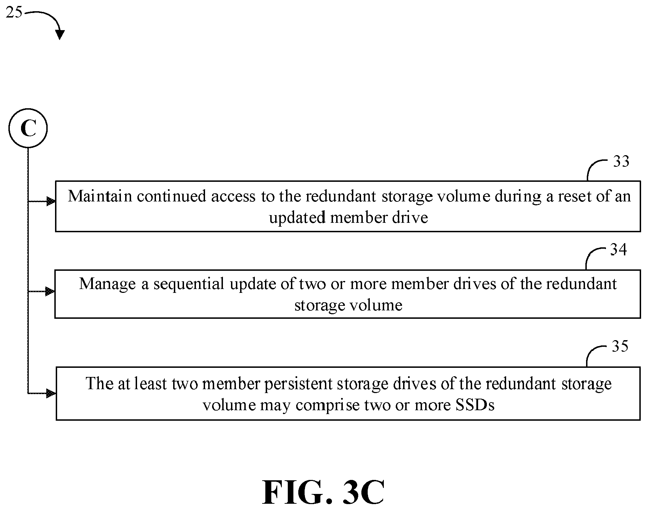

The apparatus 20 may implement one or more aspects of the method 25 (FIGs. 3A to 3C), or any of the embodiments discussed herein. In some embodiments, the illustrated apparatus 20 may include the one or more substrates 21 (e.g., silicon, sapphire, gallium arsenide) and the logic 22 (e.g., transistor array and other integrated circuit/IC components) coupled to the substrate(s) 21. The logic 22 may be implemented at least partly in configurable logic or fixed-functionality logic hardware. In one example, the logic 22 may include transistor channel regions that are positioned (e.g., embedded) within the substrate(s) 21. Thus, the interface between the logic 22 and the substrate(s) 21 may not be an abrupt junction. The logic 22 may also be considered to include an epitaxial layer that is grown on an initial wafer of the substrate(s) 21.

Turning now to FIGs. 3A to 3C, an embodiment of a method 25 of controlling redundant storage may include receiving a request for a firmware update of one or more member drives of a redundant storage volume that includes at least two member persistent storage drives at block 26, and maintaining continued access to the redundant storage volume during the firmware update of the one or more member drives of the redundant storage volume at block 27. Some embodiments of the method 25 may include deactivating a member drive to be updated at block 28, and storing a log of information related to write requests on another member drive of the redundant storage volume at block 29. For example, the method 25 may include transparently operating the redundant storage volume in a degraded mode without the deactivated member drive during the firmware update at block 30. The method 25 may also include determining if the firmware update of the deactivated member drive is complete at block 31, and applying a recovery process to the deactivated member drive based on the stored log when the firmware update of the deactivated member drive is determined to be complete at block 32. Some embodiments of the method 25 may further include maintaining continued access to the redundant storage volume during a reset of an updated member drive at block 33, and/or managing a sequential update of two or more member drives of the redundant storage volume at block 34. In any of the embodiments herein, the at least two member persistent storage drives of the redundant storage volume may comprise two or more SSDs at block 35.

Embodiments of the method 25 may be implemented in a system, apparatus, computer, device, etc., for example, such as those described herein. More particularly, hardware implementations of the method 25 may include configurable logic such as, for example, PLAs, FPGAs, CPLDs, or in fixed-functionality logic hardware using circuit technology such as, for example, ASIC, CMOS, or TTL technology, or any combination thereof. Alternatively, or additionally, the method 25 may be implemented in one or more modules as a set of logic instructions stored in a machine- or computer-readable storage medium such as RAM, ROM, PROM, firmware, flash memory, etc., to be executed by a processor or computing device. For example, computer program code to carry out the operations of the components may be written in any combination of one or more OS applicable/appropriate programming languages, including an object-oriented programming language such as PYTHON, PERL, JAVA, SMALLTALK, C++, C# or the like and conventional procedural programming languages, such as the "C" programming language or similar programming languages.

For example, the method 25 may be implemented on a computer readable medium as described in connection with Examples 23 to 29 below. Embodiments or portions of the method 25 may be implemented in firmware, applications (e.g., through an application programming interface (API)), or driver software running on an operating system (OS). Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Some embodiments may advantageously provide a RAID aware drive firmware update with a write-ahead log. Like most software, the firmware (FW) of an SSD or hard disk drive (HDD) may be improved over time (e.g., new features, bug fixes, etc.). Many such drives may have one or more such FW releases during the life of a product. The latest FW can improve performance and reliability of the drive. A FW update feature may be supported on various types of HDD and SSD drives (e.g., SAS, SATA, NVMe, etc.). For example, these and other interface standards support a dedicated command for updating firmware of a drive.

A typical FW update process for a single disk device may include two phases: 1) FW image update to the drive; and 2) FW activation. In order to activate the FW image, reset of the drive's internal controller may be necessary. Reset of the drive's controller causes the drive to disappear and reappear in the operating system after some time period. During that period of time, user data stored on the updated drive is not accessible. Such inaccessibility may occur if the updated drive is used as a system drive (e.g., storing the OS) or the drive is used to store user data (e.g., not related to the OS). In the first case, when the OS is installed on the drive to be updated, the OS generally will not automatically reset the drive's controller. Instead, the OS will notify the user that a system reboot is required to finish the FW update operation. However, in some cases the OS cannot be rebooted immediately (due to some pending operations). In the second case, when the drive to be updated is used for user data, the drive's controller reset will stop all input/output (I/O) accesses coming from applications to that drive.

The foregoing also applies to a FW update process on a RAID volume member drive. When a user applies the FW update process to drive(s) which are part of a RAID volume, the RAID volume may become unavailable and reboot of an entire system may be required (e.g., the RAID volume may store the OS). For example, a RAID controller may detect the updated drive's temporary unavailability and interpret it as a drive failure. In this case the redundant RAID volume (e.g. RAID 5) will be switched to a degraded mode by the RAID controller (e.g., in case of a single drive FW update) or failed (e.g., for two or more drives being updated concurrently). The FW update may cause a fake RAID degradation alert, an unnecessary RAID rebuild operation, and may sometimes lead to data loss.

Advantageously, some embodiments may provide RAID aware FW update technology. Embodiments of a RAID controller may handle a single member drive's controller reset in a graceful way to allow the system to access the RAID volume data during an updated drive's controller reset, without causing RAID volume degradation or failure, and avoiding any data loss related to the drive's FW update. Additionally, in the case where the OS is installed on and booted from the RAID volume, some embodiments may advantageously avoid system reboot. In some embodiments, the RAID controller is aware of a RAID member drive's FW update process. Some embodiments provide technology to sustain an ability to read and write data to a RAID volume during FW update and the updated drive's controller reset process. For example, the RAID controller will deactivate the member drive internally and store a write ahead log on another RAID volume member drive. When the FW update process completes, the RAID controller will apply a recovery process to the data which was updated during the FW update. Some embodiments may also provide technology to manage a sequential nature of a RAID volume FW update to avoid RAID volume failure (e.g., handling one member drive FW update at a time). Advantageously, some embodiments allow update of the FW on some or all RAID volume member drives without the system reboot, without interrupting application I/O, and the update may be performed transparently from the user perspective, thereby improving reliability, availability, and serviceability (RAS). RAS is important for some businesses and/or applications running critical systems that have low tolerance for downtime and must be available 24/7.

Embodiments may advantageously be applied to redundancy based RAID levels, such as RAID1, RAID10, RAID5, and RAID6. Embodiments may be applied to various FW update scenarios including FW update on a single RAID member drive, FW update on multiple RAID member drives, and FW update on a RAID volume (e.g., FW update on all member drives of a RAID volume).

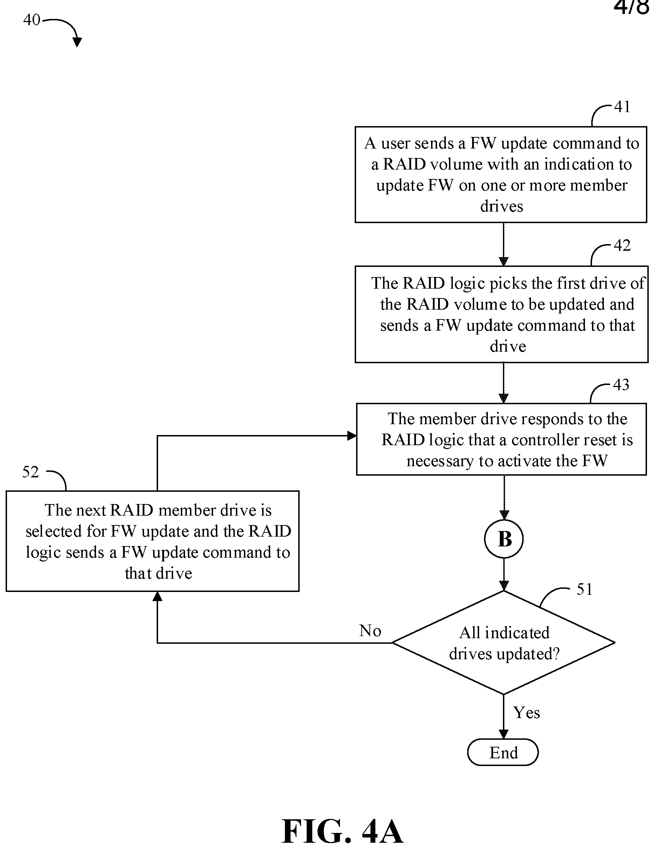

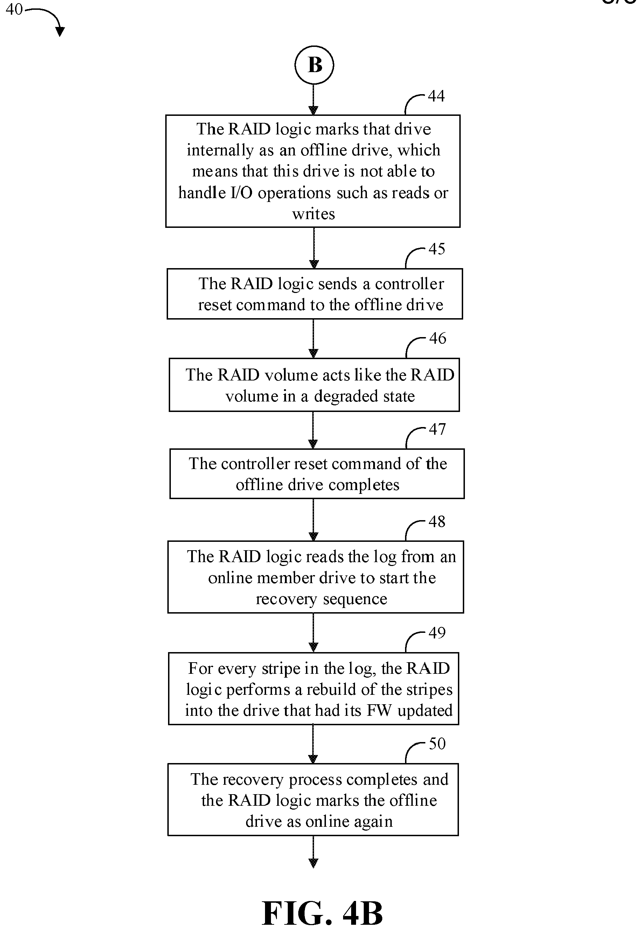

Turning now to FIGs. 4A to 4B, an embodiment of a method 40 of controlling a RAID volume may include a user sending a FW update command to a RAID volume with an indication to update FW on one or more member drives at block 41. At block 42, the RAID logic picks the first drive of the RAID volume to be updated and sends a FW update command to that drive. At block 43, the member drive responds to the RAID logic that a controller reset is necessary to activate the FW. At block 44, the RAID logic marks that drive internally as an offline drive, which means that this drive is not able to handle I/O operations such as reads or writes. At block 45, the RAID logic sends a controller reset command to the offline drive. At block 46, the RAID volume acts like the RAID volume in a degraded state (but the volume is reported to the user as normal, such that the entire operation is transparent to the user). For every incoming read request from host to the RAID volume, the RAID logic applies data reconstruction based on redundancy (e.g., for RAID1, the RAID logic reads from another member drive, for RAID5, the RAID logic reads from the other member drives and reconstructs the data using an XOR operation, etc.).

At block 47, the controller reset command of the offline drive completes. The updated drive may be up and running, but stays in an offline state until a recovery sequence completes. At block 48, the RAID logic reads the log from an online member drive to start the recovery sequence. At block 49, for every stripe in the log, the RAID logic performs a rebuild of the stripes into the drive that had its FW updated. At block 50, the recovery process completes and the RAID logic marks the offline drive as online again. At block 51, if more drives need to be updated, then at block 52 the next RAID member drive is selected for FW update and the RAID logic sends a FW update command to that drive, after which the method 40 returns to block 43. After all of the indicated member drives are updated at block 51 (e.g., one member drive, two or more member drives, or all the member drives), the entire operation is completed.

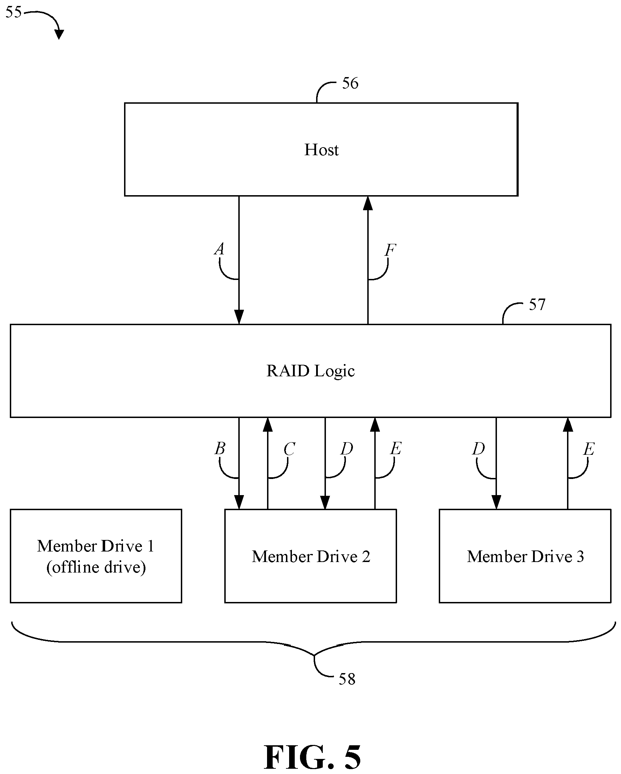

Turning now to FIG. 5, an embodiment of an electronic processing system 55 includes a host 56 communicatively coupled through RAID logic 57 to a RAID volume 58 that includes three member drives (Member Drive 1, Member Drive 2, and Member Drive 3). An example sequence flow of a write to the RAID volume 58 when a member drive to be updated is offline is illustrated with reference to arrows *A* through *F*. For every write request from the host 56 to the RAID volume 58, there is the following flow: at arrow A, a write request to the RAID volume 58 comes from the host 56; at arrow B, the RAID logic 57 writes a log to the online member drive(s) about the write from the host 56; The log contains the stripe number in the RAID volume 58, which the host write refers to; at arrow C, the member drive responds that the log has been written; at arrow D, the RAID logic 57 writes the data to the online member drives in the same manner as if the RAID volume 58 was in degraded state (transparent to the user); at arrow E, the member drives respond that the data has been written; at arrow *F*, when all member drives have responded, then RAID logic 57 responds to the host 56 that the data has been written to the RAID volume 58. Advantageously, some embodiments may provide an improvement in the system availability while doing the FW update of the RAID member drive(s). Some embodiments advantageously may also ensure that there is no data loss in the case of a simultaneous FW update on multiple RAID member drives (e.g., multiple drive resets in parallel causing RAID failure).

The technology discussed herein may be provided in various computing systems (e.g., including a non-mobile computing device such as a desktop, workstation, server, rack system, etc., a mobile computing device such as a smartphone, tablet, Ultra-Mobile Personal Computer (UMPC), laptop computer, ULTRABOOK computing device, smart watch, smart glasses, smart bracelet, etc., and/or a client/edge device such as an Internet-of-Things (IoT) device (e.g., a sensor, a camera, etc.)).

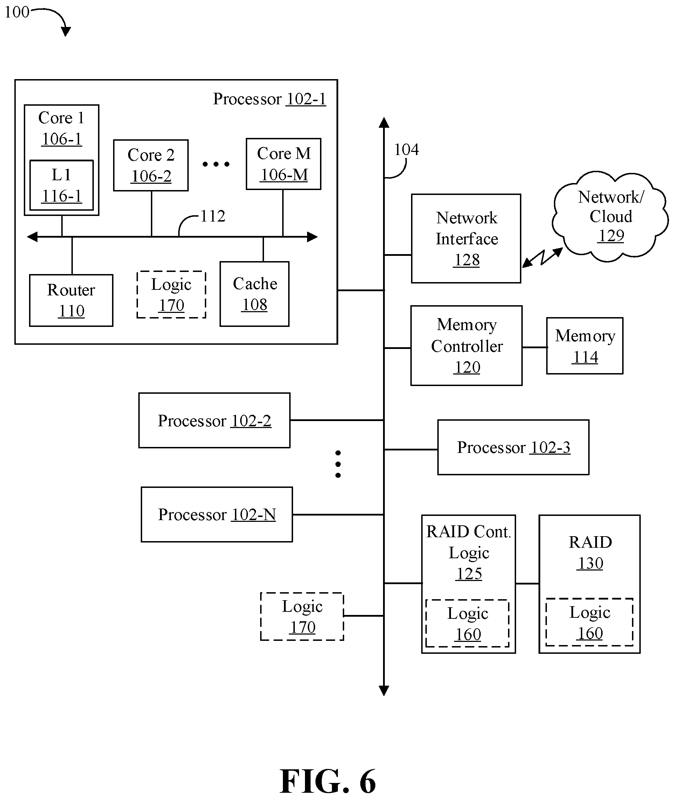

Turning now to FIG. 6, an embodiment of a computing system 100 may include one or more processors 102-1 through 102-N (generally referred to herein as "processors 102" or "processor 102"). The processors 102 may communicate via an interconnection or bus 104. Each processor 102 may include various components some of which are only discussed with reference to processor 102-1 for clarity. Accordingly, each of the remaining processors 102-2 through 102-N may include the same or similar components discussed with reference to the processor 102-1.

In some embodiments, the processor 102-1 may include one or more processor cores 106-1 through 106-M (referred to herein as "cores 106," or more generally as "core 106"), a cache 108 (which may be a shared cache or a private cache in various embodiments), and/or a router 110. The processor cores 106 may be implemented on a single integrated circuit (IC) chip. Moreover, the chip may include one or more shared and/or private caches (such as cache 108), buses or interconnections (such as a bus or interconnection 112), logic 170, memory controllers, or other components.

In some embodiments, the router 110 may be used to communicate between various components of the processor 102-1 and/or system 100. Moreover, the processor 102-1 may include more than one router 110. Furthermore, the multitude of routers 110 may be in communication to enable data routing between various components inside or outside of the processor 102-1.

The cache 108 may store data (e.g., including instructions) that is utilized by one or more components of the processor 102-1, such as the cores 106. For example, the cache 108 may locally cache data stored in a memory 114 for faster access by the components of the processor 102. As shown in FIG. 6, the memory 114 may be in communication with the processors 102 via the interconnection 104. In some embodiments, the cache 108 (that may be shared) may have various levels, for example, the cache 108 may be a mid-level cache and/or a last-level cache (LLC). Also, each of the cores 106 may include a level 1 (LI) cache (116-1) (generally referred to herein as "L1 cache 116"). Various components of the processor 102-1 may communicate with the cache 108 directly, through a bus (e.g., the bus 112), and/or a memory controller or hub.

As shown in FIG. 6, memory 114 may be coupled to other components of system 100 through a memory controller 120. Memory 114 may include volatile memory and may be interchangeably referred to as main memory. Even though the memory controller 120 is shown to be coupled between the interconnection 104 and the memory 114, the memory controller 120 may be located elsewhere in system 100. For example, memory controller 120 or portions of it may be provided within one of the processors 102 in some embodiments.

The system 100 may communicate with other devices/systems/networks via a network interface 128 (e.g., which is in communication with a computer network and/or the cloud 129 via a wired or wireless interface). For example, the network interface 128 may include an antenna (not shown) to wirelessly (e.g., via an Institute of Electrical and Electronics Engineers (IEEE) 802.11 interface (including IEEE 802.11a/b/g/n/ac, etc.), cellular interface, 3G, 4G, LTE, BLUETOOTH, etc.) communicate with the network/cloud 129.

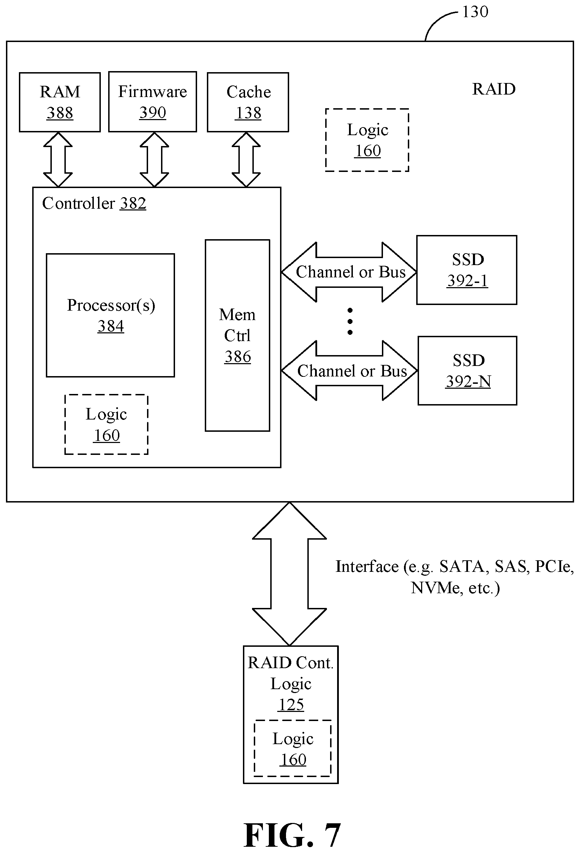

System 100 may also include a redundant storage device such as a RAID device 130 coupled to the interconnect 104 via RAID controller logic 125. Hence, logic 125 may control access by various components of system 100 to the RAID device 130. Furthermore, even though logic 125 is shown to be directly coupled to the interconnection 104 in FIG. 6, logic 125 can alternatively communicate via a storage bus/interconnect (such as the SATA (Serial Advanced Technology Attachment) bus, Peripheral Component Interconnect (PCI) (or PCI EXPRESS (PCIe) interface), NVM EXPRESS (NVMe), etc.) with one or more other components of system 100 (for example where the storage bus is coupled to interconnect 104 via some other logic like a bus bridge, chipset, etc.) Additionally, logic 125 may be incorporated into memory controller logic (such as those discussed with reference to FIG. 7) or provided on a same integrated circuit (IC) device in various embodiments (e.g., on the same circuit board device as the RAID device 130 or in the same enclosure as the RAID device 130).

Furthermore, logic 125 and/or RAID device 130 may be coupled to one or more sensors (not shown) to receive information (e.g., in the form of one or more bits or signals) to indicate the status of or values detected by the one or more sensors. These sensor(s) may be provided proximate to components of system 100 (or other computing systems discussed herein), including the cores 106, interconnections 104 or 112, components outside of the processor 102, RAID device 130, SSD bus, SATA bus, logic 125, logic 160, etc., to sense variations in various factors affecting power/thermal behavior of the system/platform, such as temperature, operating frequency, operating voltage, power consumption, and/or inter-core communication activity, etc.

FIG. 7 illustrates a block diagram of various components of the RAID device 130, according to an embodiment. As illustrated in FIG. 7, logic 160 may be located in various locations such as inside the RAID device 130 or controller 382, etc., and may include similar technology as discussed in connection with FIG. 6. The RAID device 130 includes a controller 382 (which in turn includes one or more processor cores or processors 384 and memory controller logic 386), cache 138, RAM 388, firmware storage 390, and one or more member SSDs 392-1 to 392-N (collectively member SSDs 392, which may include NAND flash, NOR flash, or other types of non-volatile memory). The member SSDs 392 are coupled to the memory controller logic 386 via one or more memory channels or busses. Also, RAID device 130 communicates with logic 125 via an interface (such as a SATA, SAS, PCIe, NVMe, etc., interface). One or more of the features/aspects/operations discussed with reference to FIGs. 1-5 may be performed by one or more of the components of FIG. 7. Processors 384 and/or controller 382 may compress/decompress (or otherwise cause compression/decompression of) data written to or read from member SSDs 392-1 to 392-N. Also, one or more of the features/aspects/operations of FIGs. 1-5 may be programmed into the firmware 390. Further, RAID controller logic 125 may also include logic 160.

As illustrated in FIGs. 6 and 7, the RAID device 130 may include logic 160, which may be in the same enclosure as the RAID device 130 and/or fully integrated on a printed circuit board (PCB) of the RAID device 130. The system 100 may include further logic 170 outside of the RAID device 130. Advantageously, the logic 160 and/or logic 170 may include technology to implement one or more aspects of the method 25 (FIGs. 3A to 3C), the method 40 (FIGs. 4A to 4B), the system 55, and/or any of the redundant storage features discussed herein. For example, the logic 170 may include technology to implement the host device/computer system/agent aspects of the various embodiments described herein (e.g., requesting information from the RAID device 130, sending information to the RAID device 130, initiating a firmware update of one or more of the SSDs 392, etc.). For example, the logic 160 may include technology to receive a request for a firmware update of one or more member SSDs 392 of a storage volume associated with the RAID device 130, and maintain continued access to the storage volume during the firmware update of the one or more member SSDs 392. In some embodiments, the logic 160 may be configured to deactivate a member SSD 392 to be updated, and store a log of information related to write requests on another member SSD 392 of the storage volume. For example, the logic 160 may be configured to transparently operate the storage volume in a degraded mode without the deactivated member SSD during the firmware update. The logic 160 may also be configured to determine if the firmware update of the deactivated SSD is complete, and apply a recovery process to the deactivated member SSD based on the stored log when the firmware update of the deactivated member SSD is determined to be complete. In some embodiments, the logic 160 may be further configured to maintain continued access to the storage volume during a reset of an updated member SSD, and/or to manage a sequential update of two or more member SSDs of the storage volume.

In other embodiments, the RAID device 130 may be replaced with any suitable redundant storage technology/media. In some embodiments, the logic 160/170 may be coupled to one or more substrates (e.g., silicon, sapphire, gallium arsenide, printed circuit board (PCB), etc.), and may include transistor channel regions that are positioned within the one or more substrates. In other embodiments, the RAID device 130 may include two or more types of storage media. For example, the bulk of the storage may be NAND and may further include some faster, smaller granularity accessible (e.g., byte-addressable) NVM such as INTEL 3DXP media. The RAID device 130 may alternatively, or additionally, include persistent volatile memory (e.g., battery or capacitor backed-up DRAM or SRAM). For example, the RAID device 130 may include POWER LOSS IMMINENT (PLI) technology with energy storing capacitors. The energy storing capacitors may provide enough energy (power) to complete any commands in progress and to make sure that any data in the DRAMs/SRAMs is committed to the non-volatile NAND media. The capacitors may act as backup batteries for the persistent volatile memory. As shown in FIG. 6, features or aspects of the logic 160 and/or the logic 170 may be distributed throughout the system 100, and/or co-located/integrated with various components of the system 100.

### Additional Notes and Examples:

Example 1 includes a semiconductor apparatus for use with redundant storage, comprising one or more substrates, and logic coupled to the one or more substrates, wherein the logic is at least partly implemented in one or more of configurable logic and fixed-functionality hardware logic, the logic coupled to the one or more substrates to receive a request for a firmware update of one or more member drives of a redundant storage volume that includes at least two member persistent storage drives, and maintain continued access to the redundant storage volume during the firmware update of the one or more member drives of the redundant storage volume.
Example 2 includes the apparatus of Example 1, wherein the logic is further to deactivate a member drive to be updated, and store a log of information related to write requests on another member drive of the redundant storage volume.
Example 3 includes the apparatus of Example 2, wherein the logic is further to transparently operate the redundant storage volume in a degraded mode without the deactivated member drive during the firmware update.
Example 4 includes the apparatus of any of Examples 2 to 3, wherein the logic is further to determine if the firmware update of the deactivated member drive is complete, and apply a recovery process to the deactivated member drive based on the stored log when the firmware update of the deactivated member drive is determined to be complete.
Example 5 includes the apparatus of any of Examples 1 to 4, wherein the logic is further to maintain continued access to the redundant storage volume during a reset of an updated member drive.
Example 6 includes the apparatus of any of Examples 1 to 5, wherein the logic is further to manage a sequential update of two or more member drives of the redundant storage volume.
Example 7 includes the apparatus of any of Examples 1 to 6, wherein the at least two member persistent storage drives of the redundant storage volume comprise two or more solid state drives.
Example 8 includes the apparatus of any of Examples 1 to 7, wherein the logic coupled to the one or more substrates includes transistor channel regions that are positioned within the one or more substrates.
Example 9 includes an electronic redundant storage system, comprising a redundant storage volume that includes at least two member persistent storage drives, a controller communicatively coupled to the redundant storage volume, the controller including logic to receive a request for a firmware update of one or more member drives of the redundant storage volume, and maintain continued access to the redundant storage volume during the firmware update of the one or more member drives of the redundant storage volume.
Example 10 includes the system of Example 9, wherein the logic is further to deactivate a member drive to be updated, and store a log of information related to write requests on another member drive of the redundant storage volume.
Example 11 includes the system of Example 10, wherein the logic is further to transparently operate the redundant storage volume in a degraded mode without the deactivated member drive during the firmware update.
Example 12 includes the system of any of Examples 10 to 11, wherein the logic is further to determine if the firmware update of the deactivated member drive is complete, and apply a recovery process to the deactivated member drive based on the stored log when the firmware update of the deactivated member drive is determined to be complete.
Example 13 includes the system of any of Examples 9 to 12, wherein the logic is further to maintain continued access to the redundant storage volume during a reset of an updated member drive.
Example 14 includes the system of any of Examples 9 to 13, wherein the logic is further to manage a sequential update of two or more member drives of the redundant storage volume.
Example 15 includes the system of any of Examples 9 to 14, wherein the at least two member persistent storage drives of the redundant storage volume comprise two or more solid state drives.
Example 16 includes a method of controlling redundant storage, comprising receiving a request for a firmware update of one or more member drives of a redundant storage volume that includes at least two member persistent storage drives, and maintaining continued access to the redundant storage volume during the firmware update of the one or more member drives of the redundant storage volume.
Example 17 includes the method of Example 16, further comprising deactivating a member drive to be updated, and storing a log of information related to write requests on another member drive of the redundant storage volume.
Example 18 includes the method of Example 17, further comprising transparently operating the redundant storage volume in a degraded mode without the deactivated member drive during the firmware update.
Example 19 includes the method of any of Examples 17 to 18, further comprising determining if the firmware update of the deactivated member drive is complete, and applying a recovery process to the deactivated member drive based on the stored log when the firmware update of the deactivated member drive is determined to be complete.
Example 20 includes the method of any of Examples 16 to 19, further comprising maintaining continued access to the redundant storage volume during a reset of an updated member drive.
Example 21 includes the method of any of Examples 16 to 20, further comprising managing a sequential update of two or more member drives of the redundant storage volume.
Example 22 includes the method of any of Examples 16 to 21, wherein the at least two member persistent storage drives of the redundant storage volume comprise two or more solid state drives.
Example 23 includes at least one computer readable storage medium, comprising a set of instructions, which when executed by a computing device, cause the computing device to receive a request for a firmware update of one or more member drives of a redundant storage volume that includes at least two member persistent storage drives, and maintain continued access to the redundant storage volume during the firmware update of the one or more member drives of the redundant storage volume.
Example 24 includes the at least one computer readable storage medium of Example 23, comprising a further set of instructions, which when executed by the computing device, cause the computing device to deactivate a member drive to be updated, and store a log of information related to write requests on another member drive of the redundant storage volume.
Example 25 includes the at least one computer readable storage medium of Example 24, comprising a further set of instructions, which when executed by the computing device, cause the computing device to transparently operate the redundant storage volume in a degraded mode without the deactivated member drive during the firmware update.
Example 26 includes the at least one computer readable storage medium of any of Examples 24 to 25, comprising a further set of instructions, which when executed by the computing device, cause the computing device to determine if the firmware update of the deactivated member drive is complete, and apply a recovery process to the deactivated member drive based on the stored log when the firmware update of the deactivated member drive is determined to be complete.
Example 27 includes the at least one computer readable storage medium of any of Examples 23 to 26, comprising a further set of instructions, which when executed by the computing device, cause the computing device to maintain continued access to the redundant storage volume during a reset of an updated member drive.
Example 28 includes the at least one computer readable storage medium of any of Examples 23 to 27, comprising a further set of instructions, which when executed by the computing device, cause the computing device to manage a sequential update of two or more member drives of the redundant storage volume.
Example 29 includes the at least one computer readable medium storage medium of any of Examples 23 to 28, wherein the at least two member persistent storage drives of the redundant storage volume comprise two or more solid state drives.
Example 30 includes a redundant storage controller apparatus, comprising means for receiving a request for a firmware update of one or more member drives of a redundant storage volume that includes at least two member persistent storage drives, and means for maintaining continued access to the redundant storage volume during the firmware update of the one or more member drives of the redundant storage volume.
Example 31 includes the apparatus of Example 30, further comprising means for deactivating a member drive to be updated, and means for storing a log of information related to write requests on another member drive of the redundant storage volume.
Example 32 includes the apparatus of Example 31, further comprising means for transparently operating the redundant storage volume in a degraded mode without the deactivated member drive during the firmware update.
Example 33 includes the apparatus of any of Examples 31 to 32, further comprising means for determining if the firmware update of the deactivated member drive is complete, and means for applying a recovery process to the deactivated member drive based on the stored log when the firmware update of the deactivated member drive is determined to be complete.
Example 34 includes the apparatus of any of Examples 30 to 33, further comprising means for maintaining continued access to the redundant storage volume during a reset of an updated member drive.
Example 35 includes the apparatus of any of Examples 30 to 34, further comprising means for managing a sequential update of two or more member drives of the redundant storage volume.
Example 36 includes the apparatus of any of Examples 30 to 35, wherein the at least two member persistent storage drives of the redundant storage volume comprise two or more solid state drives.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrase "one or more of A, B, and C" and the phrase "one or more of A, B, or C" both may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A semiconductor apparatus for use with redundant storage, comprising:
one or more substrates; and
logic coupled to the one or more substrates, wherein the logic is at least partly implemented in one or more of configurable logic and fixed-functionality hardware logic, the logic coupled to the one or more substrates to:
receive a request for a firmware update of one or more member drives of a redundant storage volume that includes at least two member persistent storage drives, and
maintain continued access to the redundant storage volume during the firmware update of the one or more member drives of the redundant storage volume.

2. The apparatus of claim 1, wherein the logic is further to:
deactivate a member drive to be updated; and
store a log of information related to write requests on another member drive of the redundant storage volume.

3. The apparatus of claim 2, wherein the logic is further to:
transparently operate the redundant storage volume in a degraded mode without the deactivated member drive during the firmware update.

4. The apparatus of any of claims 2 to 3, wherein the logic is further to:
determine if the firmware update of the deactivated member drive is complete; and
apply a recovery process to the deactivated member drive based on the stored log when the firmware update of the deactivated member drive is determined to be complete.

5. The apparatus of any of claims 1 to 4, wherein the logic is further to:
maintain continued access to the redundant storage volume during a reset of an updated member drive.

6. The apparatus of any of claims 1 to 5, wherein the logic is further to:
manage a sequential update of two or more member drives of the redundant storage volume, wherein the at least two member persistent storage drives of the redundant storage volume comprise two or more solid state drives, and wherein the logic coupled to the one or more substrates includes transistor channel regions that are positioned within the one or more substrates.

7. An electronic redundant storage system, comprising:
a redundant storage volume that includes at least two member persistent storage drives;
a controller communicatively coupled to the redundant storage volume, the controller including logic to:
receive a request for a firmware update of one or more member drives of the redundant storage volume, and
maintain continued access to the redundant storage volume during the firmware update of the one or more member drives of the redundant storage volume.

8. The system of claim 7, wherein the logic is further to:
deactivate a member drive to be updated;
store a log of information related to write requests on another member drive of the redundant storage volume;
transparently operate the redundant storage volume in a degraded mode without the deactivated member drive during the firmware update;
determine if the firmware update of the deactivated member drive is complete;
apply a recovery process to the deactivated member drive based on the stored log when the firmware update of the deactivated member drive is determined to be complete;
maintain continued access to the redundant storage volume during a reset of an updated member drive; and
manage a sequential update of two or more member drives of the redundant storage volume,
wherein the at least two member persistent storage drives of the redundant storage volume comprise two or more solid state drives.

9. A method of controlling redundant storage, comprising:
receiving a request for a firmware update of one or more member drives of a redundant storage volume that includes at least two member persistent storage drives; and
maintaining continued access to the redundant storage volume during the firmware update of the one or more member drives of the redundant storage volume.

10. The method of claim 9, further comprising:
deactivating a member drive to be updated; and
storing a log of information related to write requests on another member drive of the redundant storage volume.

11. The method of claim 10, further comprising:
transparently operating the redundant storage volume in a degraded mode without the deactivated member drive during the firmware update.

12. The method of any of claims 10 to 11, further comprising:
determining if the firmware update of the deactivated member drive is complete; and
applying a recovery process to the deactivated member drive based on the stored log when the firmware update of the deactivated member drive is determined to be complete.

13. The method of any of claims 9 to 12, further comprising:
maintaining continued access to the redundant storage volume during a reset of an updated member drive; and
managing a sequential update of two or more member drives of the redundant storage volume,
wherein the at least two member persistent storage drives of the redundant storage volume comprise two or more solid state drives.

14. At least one machine readable medium comprising:
a plurality of instructions that in response to being executed on a computing device,
causes the computing device to perform the method according to any one of claims 9-13.

15. An apparatus, comprising:
means for performing the methods according to any one of claims 9-13.
